# EUROPEAN PATENT APPLICATION

(11) **EP 1 744 535 A1**
(43) Date of publication of application: **17.01.2007**
(21) Application number: 06110073.1
(22) Date of filing: 17.02.2006
(51) Int. Cl.: H04N 1/32

(54) **User interface apparatus and image reading apparatus**

(30) Priority: 13.07.2005 JP 2005204184
(71) Applicant: KONICA MINOLTA BUSINESS TECHNOLOGIES, INC., Tokyo 100-0005 (JP)
(72) Inventor: Genda, Daisuke, c/o Konica Minolta Business Tech., Tokyo, Tokyo 192-8505 (JP)
(74) Representative: Gille Hrabal Struck Neidlein Prop Roos

(57) **Abstract**

Disclosed is a user interface apparatus to be utilized in an image reading apparatus for forming image data by reading an original image. The user interface apparatus comprises: a setting section for setting a condition of reading the original image; and an instruction section for instructing start of reading the original image according to the condition of reading having been set by the setting section, wherein the setting section is provided with a selecting section for selecting whether to imprint a time stamp to the digital data formed by reading the original image.

## Description

This application is based on Japanese Patent Application No. 2005-204184 filed with Japanese Patent Office on July 13, 2005.

### BACKGROUND OF THE INVENTION

### 1. Field of the Invention

The present invention relates to a user interface apparatus for imprinting a time stamp to image data having been read, and an image reading apparatus provided with the user interface apparatus.

### 2. Description of Related Art

Time stamp technology, to prove the fact that certain digital data existed at a specific time and that the data have not been modified after that specific time, is widely utilized while digitalization of documents and computerization of business dealings are spreading.

Commonly used procedures to imprint a time stamp on digital data, is as follows.

Firstly, a client calculates a hash value H(x) of target digital data, and sends the obtained hash value H(x) to a time stamp authority (TSA) which is previously in contract relationship. The TSA generates a time stamp TS(H(x), T) based on the hash value H(x) sent and a time obtained from a time authority (TA), and send back this time stamp TS(H(x), T) to the client who has sent the hash value H(x). The client imprints the time stamp sent from the TSA onto the digital data in a format conforming to this system (see Japanese Unexamined Laid-Open Patent Publication Nos. Hei 11-338780 and 2002-215029, for instance).

Usually this type of processing is conducted with data processing by personal computer and communication of the personal computer with the TSA via a network.

Imprinting a time stamp onto digital data as mentioned above is an effective defensive measure against various kinds of fraud such as tampering of digital data.

However, when a user obtains digital data of an original image by an image reading apparatus and imprints a time stamp on it, the user needs to conduct two independent tasks: a task for reading the original image by an image reading apparatus; and a task for imprinting a time stamp onto the digital data by a personal computer. Since the two tasks are independent, it may be caused improvidently a time when somebody else can access the digital data during the time from the generation of the digital data to the imprinting of the time stamp, which results in potential vulnerability to fraud by somebody else.

### SUMMARY OF THE INVENTION

The present invention is performed with the view of the situation described above, and an object of the invention is to provide a suitable user interface apparatus for forming digital data and imprinting a time stamp to the data. Another object of the present invention is to provide an image reading apparatus incorporating said user interface apparatus.

The present invention is achieved from the view of the situation described above, and a typical object of the invention is to provide a suitable user interface apparatus for forming digital data and imprinting a time stamp to the data. Another object of the present invention is to provide an image reading apparatus incorporating said user interface apparatus.

To achieve at least one of the above mentioned objects, one typical embodiment reflecting an aspect of the present invention is a user interface apparatus to be utilized in an image reading apparatus for forming image data by reading an original image, the user interface apparatus comprising:
a setting section for setting a condition of reading the original image; and
an instruction section for instructing start of reading the original image according to the conditions of reading having been set by the setting section,
wherein the setting section is provided with a selecting section for selecting whether to imprint a time stamp to the digital data formed by reading the original image.

In the user interface apparatus mentioned above, the setting section preferably has a display device for displaying a setting item in the setting section, and an operation device for accepting a setting of the setting item(s). The operation device is preferably in a form of touch panel, thereby the setting section constitutes a touch screen.

The selecting section preferably comprises an alternative for selecting at least one time stamp authority out of a plurality of time stamp authorities to issue digital time stamps. When the selecting section selects not to imprint a digital time stamp, the alternative is made impossible.

The another typical embodiment reflecting another aspect of the present invention is an image reading apparatus comprising an image reading section to form image data by reading an original image, and the user interface apparatus mentioned above. This image reading apparatus preferably further comprises a communication section for communicating with the time stamp authority to issue a digital time stamp. When reading an original image is instructed by the instruction section and the reading of the original image has been finished by the image reading section, the communication section preferably automatically conducts communication with the time stamp authority. The communication section preferably communicates with the time stamp authority selected by the selecting section.

According to the above-described embodiments, prior to the document reading, whether to imprint a time stamp to the digital data to be obtained by reading the document reading can be set, and this enables to imprint a time stamp as a part of the document reading process and provide a user interface apparatus with preferable operability.

According to the embodiments, the setting section 30 has display device 31 and operation device 33, therefore, reading condition can be set by the setting operation and the set condition can be confirmed by eyes.

According to the embodiments, the interface apparatus is further provided with a setting section 30 with reduced size by unifying a display device and an operation device, and with easy changing and easy adding of setting items by changing display on the display device corresponding to the selected mode.

According to the embodiments, with the user interface apparatus, a user can set the selection of TSAs by considering the importance of the document or the cost related to the time stamp imprinting.

According to the embodiments, by generating a time stamp with each of plural TSAs, technically possible fraud by a single TSA can be prevented.

According to the embodiments, in a case where time stamp is not required, the unnecessary operation, after the user selected not to imprint a time stamp on digital data, is prevented in advance.

According to the embodiments, an image reading apparatus is provided with the user interface apparatus mentioned above.

According to the embodiments, an image reading apparatus is provided which can obtain a digital time stamp from a TSA via a communication section.

According to the embodiments, since the process for imprinting a time stamp to the completed digital data starts immediately after finishing the image reading, by reducing the time until the time stamp is imprinted, the risk of the digital data being falsified before imprinting the time stamp can be lessened.

According to the embodiments, the image reading apparatus can communicate with the TSA selected by the selecting section.

### BRIEF DESCRIPTION OF THE DRAWINGS

These and other objects, advantages and features of the invention will become apparent from the following description thereof taken in conjunction with the accompanying drawings in which:
Fig. 1 is a conceptual diagram of an image reading apparatus;
Fig. 2 is a conceptual diagram of a user interface apparatus;
Fig. 3 is a block diagram showing control sections of an image reading apparatus;
Fig. 4 is a flow chart showing flow of the time stamp imprinting process;
Fig. 5 shows an example of alternatives of selecting whether or not to imprint a time stamp;
Fig. 6 shows an example of alternatives of selecting simple mode or distributed mode;
Fig. 7 shows an example of alternative in cases where the simple mode is selected;
Fig. 8 is an example of alternative in cases where the distributed mode is selected; and
Fig. 9 is the other display example for selecting the time stamp authority.

### DETAILED DESCRIPTION OF PREFERRED EMBODIMENTS

Embodiments of the present invention will be described below.

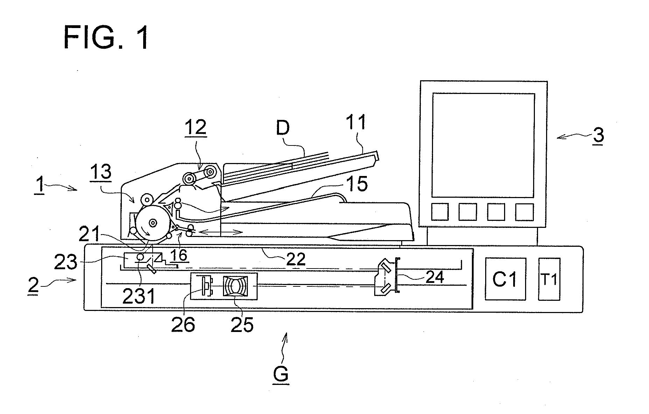

Fig. 1 is a conceptual diagram of an image reading apparatus equipped with a user interface apparatus of the present embodiment.

Image reading apparatus G is structured with automatic document feeding apparatus 1, document reading apparatus 2 to read a document transported by the automatic document feeding apparatus or a document placed on a platen glass, and user interface apparatus 3.

Automatic document feeding apparatus 1 feeds plural sheets of document D stacked on document table 11 one by one with separation roller 12 into a feeding path, transports the document through document transporting section 13 having a plurality of guide members and a plurality of rollers, and ejects the transported documents onto document ejection table 15.

An image of document D being transported is read by the document reading apparatus at document image reading position 21 in the transporting path.

In cases of reading a double-sided document, document D whose first side image has been read is reversed by document reversing section 16 having a pair of rollers and a transporting path switching guide, and is sent out again into transporting section 13.

In cases of reading a single sheet of document D, by placing document D on platen glass 22 in image reading section 2, the original image can be read by scanning with an optical system in document reading apparatus 2.

Document reading apparatus 2 is an apparatus for obtaining digital data by reading an original image, and at the document image reading position, a light exposed original image is focused on an image capturing device 26 of line type CCD image sensor by first mirror unit 23, second mirror unit 24 and imaging lens 25.

Signals sent from image capturing device 26 are subjected to A/D conversion by an IC provided adjacent to image capturing element 26, and are sent to control section C1. The sent signals are subjected to processing such as a shading compensation and compression at an image processing section in control section C1, and are stored in a specific file temporarily formed in memory M1 of control section C1.

When reading of original image has been finished, the stored digital data is read out from the file, and a hash value H(x) of the digital data is calculated by a hash value calculating section realized by collaborating with a publicly known software program. The calculated hash value H(x) is sent to a time stamp authority (TSA) previously selected by selecting section 34 provided at a setting section of the user interface apparatus.

The TSA generates a time stamp (H(x), T) based on the sent hash value H(x) and time information T, and sends back the generated time stamp to the sender of hash value H(x).

The time stamp (H(x), T) sent from the TSA is embedded in the digital data by a time stamp imprinting section realized by collaboration with a known software program. The digital data imprinted a time stamp is sent to an image processing apparatus such as a personal computer as read image data, and is stored in a specific file.

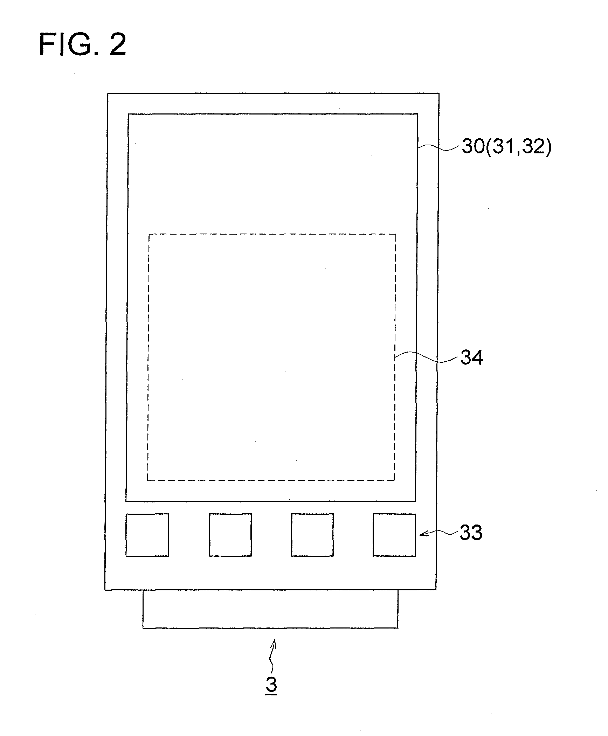

Fig. 2 is a conceptual diagram of user interface apparatus 3. User interface apparatus 3 is structured with setting section 30 including display device 31 to display images and characters and operation device 32 to allow a user to input data such as setting information and selecting information, instruction section 33 having plural pushbutton switches, and a control section C2. Operation device 32 in the present embodiment is commonly known as touch panel, in which a transparent sheet having ITO (Indium Tin Oxide) electrodes are provided in close contact to the display device to form a touch screen.

Before starting document reading, a user sets whether to imprint time stamp or not to the document by the selecting section which is a part of setting section, and if the user sets to imprint time stamp, the user conducts the setting to select a TSA.

When a prescribed button in instruction section 33 is pushed and an instruction signal is inputted to start reading the document, the instruction signal is sent to control section C1 via control section C2, and the reading of document starts. To the digital data obtained by the reading, the time stamp imprinting processing is applied.

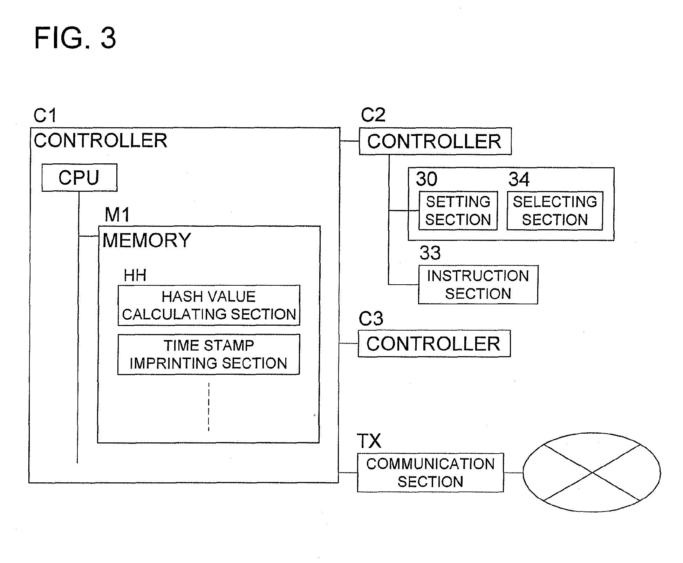

Fig. 3 is a block diagram showing the relation of control sections in an image reading apparatus G.

Controller C1 is a computer system incorporating CPU (CPU1), memory M and other components (which are not illustrated) including a calculating unit, an I/O port, an interface for communication, and further having a circuit to drive a plurality of driving sections provided in document reading apparatus 2.

Each control is performed by executing the program, which is software stored in memory 1, corresponding to the job.

Controller C2 is a control section to control user interface apparatus 3, and mainly executes outputting of various displays and controlling information exchange between the user and document reading apparatus G by recognizing information inputted from setting section 30 or instruction section 33.

Controller C3 is a control section to control automatic document feeding apparatus 1, and controls each driving section of automatic document feeding apparatus 1, based on information exchange with controller C1.

Image reading apparatus G of the present embodiment comprises three controllers C1, C2, C3 which are small computer systems incorporated in CPU, and are connected by communications therebetween. However, it is possible to make controller C1 have the functions of controllers C1, C2, and C3.

Communication section TX is a commonly known interface for communication provided between controller C1 of image reading apparatus G and a communication network, and is used for sending and receiving data.

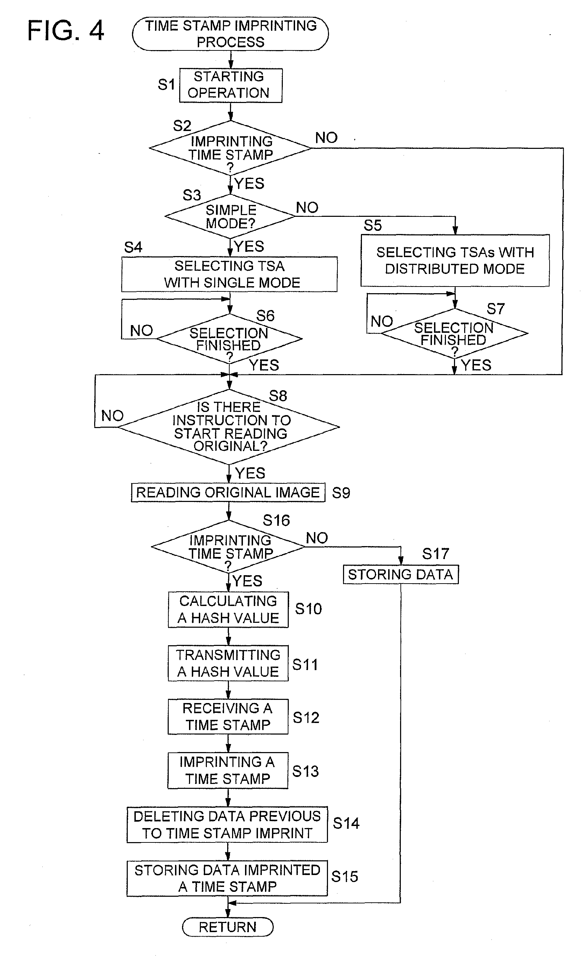

Fig. 4 is a flow chart showing the flow of the time stamp imprinting process to digital data in image reading apparatus G of the present embodiment. In this flow chart, steps S1 to S8 are executed by controller 2 of user interface apparatus 3, and steps S9 to S15 are executed by controller 1 of document reading apparatus 2. Namely, programs relating to steps S1 to S8 are stored in a nonvolatile memory of controller C2, which reads out the programs to be executed. Programs relating to steps S9 to S15 are stored in memory M1 of controller C1, and controller C1 reads out the programs to be executed.

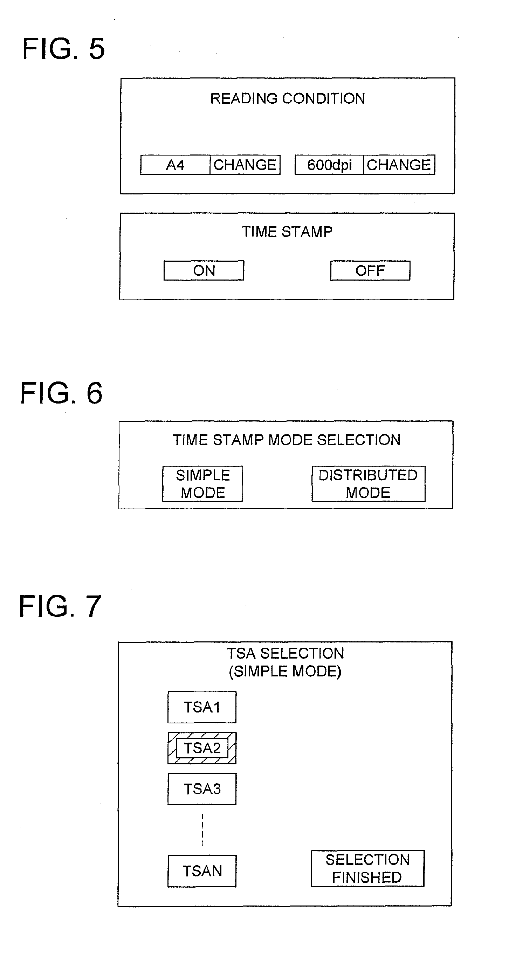

When instruction information to start operation of original image reading is inputted from instruction section of user interface apparatus 3 in image reading apparatus G (step S1), an image screen exemplified in Fig. 5, which is an alternative of whether to imprint a time stamp to digital data obtained by reading, is displayed and prompts a user to make a selection (step S2).

In cases when not to imprint a time stamp is selected (step S2: N), any display regarding the selection of TSA is not outputted, and waited for is input of instruction to start image reading (step S8).

On the other hand, in cases when to imprint a time stamp is selected (step S2: Y), on display device 31 of setting section 30, an image screen exemplified in Fig. 6, which shows alternatives for selecting either mode of a simple mode for generating a time stamp by one TSA, or a distributed mode for generating time stamps by plural TSAs (step S3).

Incidentally, the distributed mode means a mode where the hash value H(x), which is calculated based on digital data obtained by reading an image, is sent to designated plural time stamp generating agencies, and returned plural time stamps TS1 (H(x), T1) - TSN (H(x), TN) are imprinted to the digital data. This mode prevents falsification by a single TSA.

When the simple mode is selected (step S3: Y), on display device 31, an image screen is displayed exemplified in Fig.7, which shows alternatives of selecting a TSA, and a user touches the displayed position of the desired TSA out of plural TSAs TSA1 - TSAN (step S4), then pushes the button of finished selection (step S6).

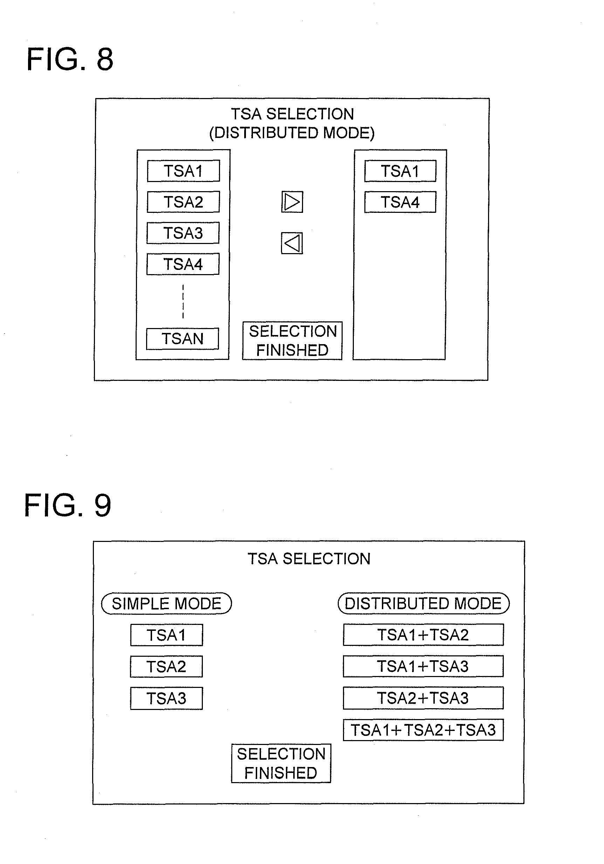

When the distributed mode is selected (step S3: N), on display device 31, an image screen is displayed exemplified in Fig.8, which shows alternatives for selecting TSAs, and a user touches the displayed positions of the desired time stamp generating agencies out of plural TSAs TSA1 - TSAN and the position of arrow mark (step S5). After the selected TSAs are displayed in the right side frame, the user, who finished the selection of the authorities, pushes the button of finished selection (step S7).

Fig. 9 shows another example of a display screen for selecting the time stamp agencies, and has functions similar on a single screen as the functions to guide the user selecting the TSAs by using the two screens of Figs. 7 and 8. This type of screen is effective in cases where there are a small number of TSAs to be selected.

When the above described setting operations by the setting section are finished, and a button instructing to start document reading is pushed (step S8: Y), an image reading condition and information indicating necessity of imprinting a time stamp are sent from controller C2 to controller C1. Herein, when to imprint a time stamp is requested, information of available TSAs is also sent to controller C1. Controller C1 receives these pieces of information, starts the document reading, obtains digital data from the read image, and stores the digital data in a specific area of memory M1 (step S9).

Then, controller C2 judges the necessity of imprinting a time stamp in step S16.

In cases where the time stamp imprinting is necessary (step S16: Y), CPU1 functions as hash value calculating section HH by reading out a program for calculating hash value H(x) from memory M1, and calculates hash value H(x) of the digital data (step S10). Obtained hash value H(x) is sent to the selected TSA through communication section TX (step S11), then a generated time stamp TS (H(x), T) is sent back from the selected TSA (step S12).

When receives time stamp TS (H(x), T), by reading out a program for imprinting time stamp from memory M1, CPU1 functions as time stamp imprinting section TT, and imprints the time stamp TS (H(x), T) onto the digital data stored (step S13). And the digital data before being imprinted time stamp Ts (H(x), T) is erased to be prevented from falsification or tempering(step S14). The digital data imprinted the time stamp is stored in a specific area (step S15), and waits for a transfer process, which being executed in a prescribed order, to an information processing apparatus such as a PC.

On the other hand, in cases where the time stamp imprinting is not necessary (step S16: N), in place of steps S1 to S15, the process proceeds to step S17 for storing the read digital data in a specific area and waits for a transfer process, which being executed in a prescribed order, to an information processing apparatus such as a PC.

By utilizing the user interface apparatus and the image reading apparatus incorporating the user interface apparatus described above, risk of the digital data obtained by reading a document image being falsified or tempered can be lessened.

## Claims

1. A user interface apparatus to be utilized in an image reading apparatus for forming image data by reading an original image, the user interface apparatus comprising:
a setting section for setting a condition of reading the original image; and
an instruction section for instructing start of reading the original image according to the condition of reading having been set by the setting section,
wherein the setting section is provided with a selecting section for selecting whether to imprint a time stamp to the digital data formed by reading the original image.

2. The user interface apparatus of claim 1, wherein the setting section has a display device for displaying a setting item in the setting section, and an operation device for accepting a setting of the setting item.

3. The user interface apparatus of claim 2, wherein the operation device is a touch panel provided with the display section.

4. The user interface apparatus of claim 1, wherein the selecting section comprises an alternative for selecting one time stamp authority out of a plurality of time stamp authorities to issue digital time stamps.

5. The user interface apparatus of claim 1, wherein the selecting section comprises an alternative for selecting two or more different time stamp authorities out of a plurality of time stamp authorities to issue digital time stamps.

6. The user interface apparatus of claim 4 or 5, wherein when the selecting section selects not to imprint a digital time stamp, the alternative is made impossible.

7. An image reading apparatus comprising an image reading section to form image data by reading an original image, and the user interface apparatus described in any one of claims 1 to 6.

8. The image reading apparatus of claim 7, further comprising a communication section for communicating with the time stamp authority to issue a digital time stamp.

9. The image reading apparatus of claim 8, wherein when reading an original image is instructed by the instruction section and the reading of the original image has been finished by the image reading section, the communication section automatically conducts communication with the time stamp authority.

10. The image reading apparatus described in claim 8 or 9, wherein the communication section communicates with the time stamp authority selected by the selecting section.
